# EUROPEAN PATENT APPLICATION

(11) **EP 4 563 376 A1**
(43) Date of publication of application: **04.06.2025**
(21) Application number: 23213669.7
(22) Date of filing: 01.12.2023
(51) Int. Cl.: B60K 1/00, B60P 1/04, G02B 27/00

(54) **SENSOR ASSEMBLY, MINING VEHICLE AND METHOD**

(71) Applicant: Sandvik Mining and Construction Oy, 33330 Tampere (FI)
(72) Inventor: TAMMINEN, Pekka, 33311 Tampere (FI)
(74) Representative: Sandvik

(57) **Abstract**

A sensor assembly, a mining vehicle, and a method for providing monitoring data. The sensor assembly (11) comprises at least one sensor (8) for providing sensing data on surroundings of the mining vehicle (1), a body (12), and a protective cover element (13) surrounding the sensor. There is also a cleaning device (14) for removing dirt (21) from outer surfaces of the protective cover. At least the cover element is movable in relation to the body. The assembly is provided with a wiper (15) facing towards an outer surface of the cover element. The wiper is serving as the cleaning device and is configured to wipe off the dirt from the outer surface of the cover element in response to the relative movement between the cover element and the body.

## Description

### Background

The present application relates generally to a sensor assembly to be used in a mining vehicle and comprising one or more sensors for providing sensing data on surroundings of the mining vehicle.

The present application relates generally to a mining vehicle provided with a sensor assembly, and to a method for providing monitoring data on surroundings of a mining vehicle.

The field of the application is defined more specifically in the preambles of the independent claims.

In mines different type of mining vehicles are used for executing different mining tasks and operations. The mining vehicles may be controlled manually by an on-board or remote operator, or alternatively the control may be automatic. In all cases it is beneficial to provide sensing data on surroundings of the mining vehicle moving at a mining work site so that proper collision avoidance can be guaranteed, and the mining vehicle can operate efficiently. However, the mining vehicles operate at harsh mining conditions wherefore different sensors and cameras mounted to the mining vehicles are exposed to dust, dirt, mud and moisture. Thereby reliable sensing data might be challenging to provide because the sensors get dirty. There have been several attempts to solve this problem and different cleaning apparatuses have been disclosed. However, the known solutions have shown some disadvantages.

### Brief description

The present application relates generally to a novel and improved sensor assembly, a mining vehicle provided with such sensor assembly, and a novel and improved method for providing monitoring data on surroundings of a mining vehicle.

A sensor assembly for a mining vehicle; wherein the sensor assembly comprises: at least one sensor for providing sensing data on surroundings of the mining vehicle; a body; a protective cover element surrounding the sensor; a cleaning device for removing dirt from outer surfaces of the cover element; and wherein at least the surrounding cover element is movable in relation to the body; the sensor assembly is provided with at least wiper facing towards an outer surface of the cover element; and wherein the wiper is serving as the cleaning device configured to wipe off the dirt from the outer surface of the cover element in response to the relative movement between the cover element and the body.

A mining vehicle comprising: a movable carrier; at least one mining work device mounted on the carrier; and at least one sensor assembly for providing sensing data on surroundings of the mining vehicle; and wherein the sensor assembly is in accordance with the features disclosed in this document.

A method for providing monitoring data on surroundings of a mining vehicle, wherein the method comprises: generating sensing data on the surroundings by means of an on-board sensor assembly comprising at least one sensor; protecting the sensor by means of a protective cover element surrounding the sensor; and removing dirt from outer surface of the protective cover; and wherein the method further comprises moving the cover element in relation to a body of the sensor assembly; and wiping off the dirt from the outer surface of the cover element by means of at least wiper mounted to the body when the relative movement between the cover element and the body exists.

The present application relates generally to the sensor assembly which comprises one or more sensors for providing sensing data on surroundings of the mining vehicle. The assembly further comprises a body, and a protective cover element surrounding the sensor. There is also a cleaning device for removing dirt from outer surfaces of the protective cover. At least the surrounding cover element is movable in relation to the body. The assembly is provided with a wiper facing towards an outer surface of the cover element, whereby the wiper is serving as the cleaning device since it is configured to wipe off the dirt from the outer surface of the cover element in response to the relative movement between the cover element and the body.

In other words, the sensor assembly comprises a static wiper and the object to be cleaned i.e., the cover element, is moved in relation to the wiper.

One of the advantages of the disclosed solution is that dirt, debris, dust, moisture and other foreign matter on the surfaces of the cover element can be removed so that usability of the sensor is improved. The disclosed solution based on the wiper is simple, durable, service free, and inexpensive. Further, the disclosed solution can be implemented in a versatile manner in different mining vehicles for preventing collisions, decreasing damages to the mining vehicles, and improving overall safety in mine. It is also possible to avoid collisions between the mining vehicles and persons working at the mine work site and to thereby increase the safety. Then there may be for example one or more proximity sensors in the sensor assembly.

According to an example embodiment, the wiper is made of resilient material such as rubber, rubber-like material, or it may be polymer material, such as polyurethane.

According to an example embodiment, the sensor includes at least one of the following sensing devices: a camera, an ultrasonic radar, a lidar, a laser scanner. The sensor assembly may comprise one sensing device, or alternatively, two or more sensors may be utilized depending on the need and circumstances. Further, in one mining vehicle there may be several sensor assemblies.

According to an example embodiment, the cover element is at least partly made of material that allows sensing signals to pass through it. The material can be selected in accordance with the implemented sensor.

According to an example embodiment, the sensor and the surrounding cover element are movable together in relation to the body. Thus, the sensor moves in conjunction with the cover element.

According to an example embodiment, the body may be provided with integrated structural spaces or elements for mounting the wiper to the body, or alternatively, there may be separate wiper holding supports for mounting the wiper to the body.

According to an example embodiment, the sensor is camera and the cover element surrounding the sensor comprises a transparent section. In other words, the entire cover element may be made of transparent material, or alternatively, there may be one or more transparent windows at locations where the camera is located.

According to an example embodiment, the transparent material implemented in the cover element may be of polycarbonate (PC) material which has high strength and good resistance to impacts and scratches. Alternatively, acrylic and other clear and durable plastics may be used. Of course, the transparent cover, or its windows, may be made of glass.

According to an example embodiment, the cover element is a tubular element with a round outer surface. Then the wiper is a wiper ring arranged to surround the tubular cover element. In other words, the wiper ring surrounding the cover element is configured to wipe off dirt from whole circumference in one go.

According to an example embodiment, the cover element and the sensor inside the cover element are protruding from the body and are movable inside the body for providing the mentioned relative movement. The wiper is mounted at a first end part of the body and is configured to wipe off the dirt from the outer surface of the cover element in response to the movement of the cover element towards an opposite second end part of the body. In other words, the body is surrounding partly the protruding cover element and when the cover element is retracted at least partly inside the surrounding body, then one or more wipers clean the outer surface of the cover element. Thus, the sensor assembly has a normal sensing position or mode with the extended configuration and a cleaning position or mode with the retracted configuration.

According to an example embodiment, the body and the cover element have both tubular configurations.

According to an example embodiment, the body comprises a wiper housing at the first end portion for receiving the wiper ring. The wiper housing provides the wiper ring with proper support. The wiper ring may be locked in place with a groove and circlip mounting principle, whereby the wiper ring easy to remove and change when being worn.

According to an example embodiment, the cover element is arranged to be turnable around longitudinal axis of the sensor assembly and in relation to the body. The cover element comprises a groove having slanted orientation in relation to the longitudinal axis. The body comprises a transverse pin which is in engagement with the groove whereby the groove and the pin form a transmission mechanism for transforming turning movement of the cover element into axial movement. In other words, the cover element is configured to move in axial direction in relation to the body when turning movement is directed to the cover element. The body may be mounted immovably. The disclosed solution is simple, inexpensive and reliable.

According to an example embodiment, the groove and pin system may, in some cases, be substituted by means of matching screws surfaces, for example.

According to an example embodiment, the sensor assembly comprises a lever connected to the cover element and configured to transmit external turning movement to the cover element. In other words, the lever may be connected to any suitable movable machine element outside the sensor assembly so that the needed rotation movement can be transmitted to the cover element. The transmitted rotation movement is further converted into axial movement to thereby executed the cleaning movement. An advantage of this embodiment is that there is no need for any moving actuator in the sensing arrangement because the externally generated movement is utilized.

According to an example embodiment, the sensor assembly comprises a dedicated rotation actuator connected to the cover element and configured to turning the cover element.

According to an example embodiment, the sensor assembly comprises a dedicated rotation actuator connected to the body and is configured to turn the body in relation to the cover element.

According to an example embodiment, the sensor assembly comprises a dedicated linear actuator connected to the cover element and configured to move the cover element in axial direction relative to the body. In other words, the sensor assembly may be provided with an electrical linear motor or solenoid for moving the cover element. Alternatively, there may be a pressure medium operated cylinder, such as hydraulic or pneumatic cylinder for moving the cover element. One further possibility is to use an electric or pressure medium operated motor and a toothed rack or corresponding transmission member for converting the rotation movement into linear movement.

According to an example embodiment, the disclosed solution relates to a mining vehicle comprising: a movable carrier; at least one mining work device mounted on the carrier; and at least one sensor assembly for providing sensing data on surroundings of the mining vehicle. The sensor assembly is in accordance with the features and embodiments disclosed in this document. In other words, the mining vehicle may comprise one or more sensor assemblies for monitoring the surroundings of the mining vehicle whereby collision protection is improved, and an operator of the mining vehicle is provided with assisting data for controlling the vehicle. Since the sensor assembly is provided with the disclosed cleaning device, the monitoring data can be provided reliably despite of harsh conditions in the mine.

When the mining vehicle is operated automatically, the assistant data is configured to be transmitted to a cloud service and next steps in the operation will be made according to this data.

According to an example embodiment, the mining vehicle may be a rock drilling rig, bolting rig, load haul dump vehicle (LHD), dump truck, or any other vehicle provided with a mine work apparatus and being designed and used in mine working operations in any type of mines.

According to an example embodiment, some additional example mining vehicles wherein the sensor assembly can be implemented may be vehicles which are used for transporting persons in the mine environment, vehicles being used to water the mining environment, and different vehicles which are used to execute utility tasks in the mines.

According to an example embodiment, the mining vehicle is a wheeled dump truck wherein the mining work device is a dump box for hauling detached rock material in a mine. The at least one sensor assembly is mounted to a structure of the dump box. In other words, the sensor assembly is located at a rear part of the dump truck together with the dump box whereby the sensor assembly can provide sensing data especially when the dump truck is driving in reverse direction and visibility is poor from a control cabin.

According to an example embodiment, the dump truck is a frame-steered vehicle comprising a front frame part and a rear frame part connected to each other by means of a steering joint. The frame parts can be turned relative to each other around the steering joint by means of one or more steering actuators, such as steering cylinders. The disclosed solution is especially useful in such frame-steered mine trucks when reversing in narrow mine tunnels and when making sharp corners during the reversing. In such situations the operator can be provided with valuable data on position and orientation of wheel tracks of rear wheels of the rear frame part. This way the operator may be assisted in the reversing and collisions can be prevented.

According to an example embodiment, the sensor assembly is mounted to a bottom part structure of the dump box so that there is good visibility to wheels below the dump box.

According to an example embodiment, the sensor assembly may be mounted to the dump box directly or indirectly. In the indirect mounting there may be one or more separate mounting elements, brackets, or support pieces between the sensor assembly and the dump box for assisting the mounting.

According to an alternative example embodiment, the sensor assembly may be mounted to a rear part of the front frame part, in connection with a steering joint, or anywhere else so that visibility to the rear wheel is possible.

According to an alternative example embodiment, the dump box extends in transverse direction over rear wheels which are located below the dump box. Then one of more sensor assemblies are located between a lateral outer surface of the dump box and a lateral outer surface of the rear wheel closest to the outer surface of the dump box. In other words, the sensor assembly mounted to a structure of the dump box is well protected by the dump box against possible collisions against walls of mine corridors and other obstacles. The sensor assembly is also located so that there is good visibility to driving surface and to position of the wheel.

According to an alternative example embodiment, the dump box is tiltable by means of at least one hydraulic cylinder in relation to tilting axis being in transverse direction relative to a longitudinal direction of the carrier. A first end of the hydraulic cylinder is connected by means of a first turning joint to the carrier and a second end of the hydraulic cylinder is connected by means of a second turning joint to a bottom part structure of the dump box whereby a relative turning movement occurs between the second end of the hydraulic cylinder and the dump box in response to the tilting of the dump box. The sensor assembly comprises a lever connected between the second end of the hydraulic cylinder and the cover element whereby the lever is configured to transmit the mentioned relative turning movement to the cover element wherein the turning movement is converted into axial movement. In other words, the cleaning device of the sensor assembly is actually powered by means of the tilting hydraulic cylinder.

According to an example embodiment, the lever is provided with two branches between which a piston rod of the hydraulic cylinder is located. Thus, when the hydraulic cylinder tilts when lifting the dump box, then the piston rod also tilts. This turning movement of the hydraulic cylinder and its piston rod is transmitted by the lever to the structure of the sensor assembly.

According to an example embodiment, the disclosed solution relates also to a method for providing monitoring data on surroundings of a mining vehicle. The method comprises: generating sensing data on the surroundings by means of an on-board sensor assembly comprising at least one sensor; protecting the sensor by means of a protective cover element surrounding the sensor; and removing dirt from outer surface of the protective cover. The method further comprises moving the cover element in relation to a body of the sensor assembly, and wiping off the dirt from the outer surface of the cover element by means of at least wiper mounted to the body when the relative movement between the cover element and the body exists.

According to an example embodiment, the method further comprises coupling the sensor assembly to moving elements of a dump box of a dump truck and moving the cover element in relation to the body simultaneously when tilting the dump box so that the wiper automatically executes the cleaning function each time the dump box is tilted.

According to an example embodiment, the method further comprises tilting the dump box by means of at least one hydraulic cylinder and coupling the sensor assembly mechanically to the hydraulic cylinder and transmitting turning movement of the hydraulic cylinder to the cover element for causing the relative movement between the cover element and the body for executing the wiping.

The above disclosed embodiments may be combined in order to form suitable solutions having those of the above features that are needed.

### Brief description of the figures

Some embodiments are described in more detail in the accompanying drawings, in which
Figures 1 - 3 are schematic side views of some mining vehicles provided with sensors,
Figure 4 is a schematic diagram of some features relating to a sensor assembly of a mining vehicle,
Figures 5 and 6 are schematic views of a sensor assembly in a normal sensing position with extended configuration and in a cleaning position with retracted configuration,
Figure 7 is a schematic views of a sensor assembly provided with a motor for moving a protective casing,
Figures 8 and 9 are schematic views of a sensor assembly wherein a body is moved in relation to a protective casing,
Figure 10 is a schematic view of a sensor assembly provided with a turning motor and a pin and groove arrangement for generating axial movements,
Figure 11 is a schematic and simplified view showing a basic principle of a pin and groove arrangement,
Figure 12 is a schematic view of a sensor assembly provided with a pin and groove arrangement and a lever for transmitting external turning movements to the assembly,
Figure 13 is a schematic view of a mining truck provided with a tiltable dump box and hydraulic tilting cylinders,
Figures 14 and 15 are schematic views of a hydraulic tilting cylinder in two operational positions,
Figure 16 is a schematic view of a sensor assembly which is mounted between an outermost side surface of a dump box and an outer side surface of a rear wheel,
Figure 17 is a schematic and detailed view of a coupling between a piston rod of a hydraulic cylinder and a lever transmitting turning forces to a sensor assembly, and
Figure 18 is a schematic view of a sensor assembly in an extended sensing position.

For the sake of clarity, the figures show some embodiments of the disclosed solution in a simplified manner. In the figures, like reference numerals identify like elements.

### Detailed description

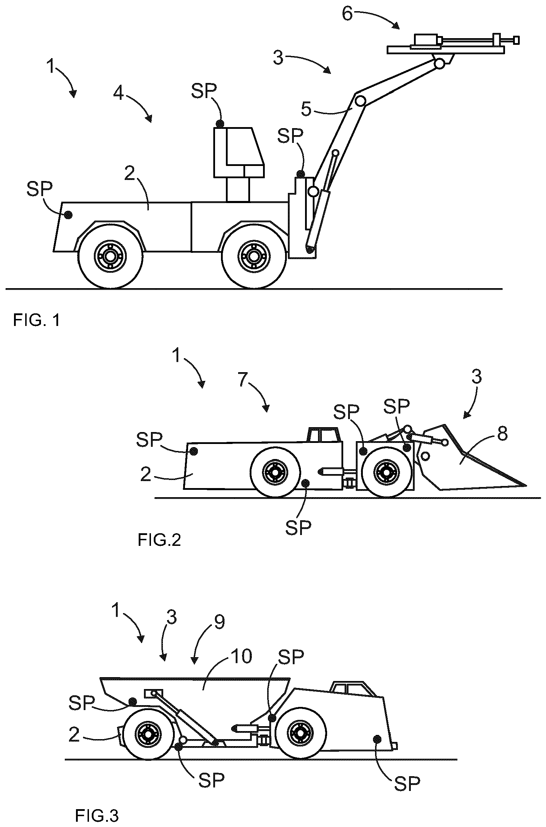

Figures 1 - 3 disclose different mining vehicles 1 which all comprise a movable carrier 2 and a mining work device 3 mounted on the carrier 2. The disclosed mining vehicles 1 are also provided with one or more sensor assemblies for providing sensing data on surroundings of the mining vehicles 1. In Figures 1 - 3 some possible sensor assembly mounting positions SP are shown. The position SP can be selected so that assisting data can be provided for reversing the mining vehicle, monitoring movements of the mining work device 3, and providing collision prevention data, for example. Since the sensor assemblies can be relatively small in size, it is possible to place them in a versatile manner to desired locations on the mining vehicle 1.

In Figure 1 the mining vehicle 1 is a rock drilling rig 4 and the mining work device 3 comprises a drilling boom 5 and a rock drilling unit 6 mounted to a distal end portion of the drilling boom 5. Alternatively, the rock drilling unit 6 may be a bolting head.

In Figure 2 the mining vehicle 1 is a load haul dump vehicle (LHD) 7 and the mining work device 3 comprises a bucket 8 for handling detached rock material.

In Figure 3 the mining vehicle 1 is a wheeled dump truck 9 and the mining work device 3 is a dump box 10 for hauling detached rock material in a mine.

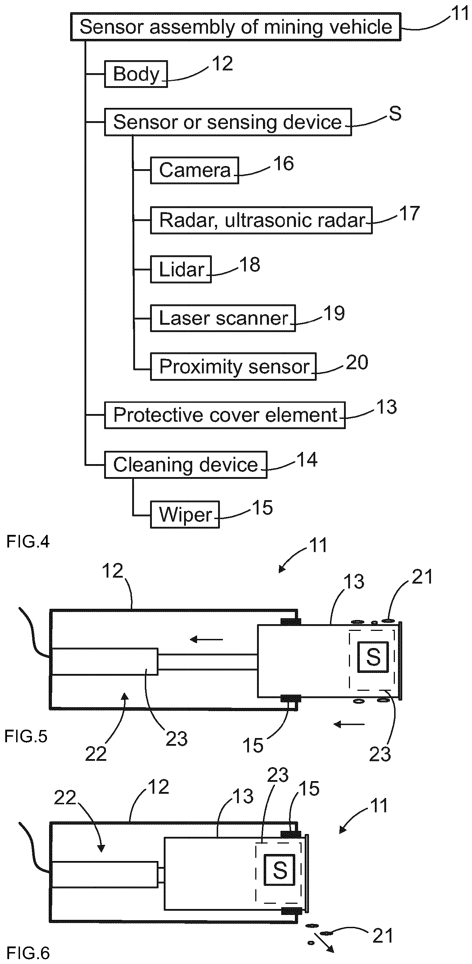

Figure 4 discloses some features of a sensor assembly 11 of a mining vehicle. The sensor assembly 11 comprises a body 12 and one or more sensors S. A protective cover element 13 is arranged to surround the sensor S. There is also a cleaning device 14 for removing dirt by means of one or more wipers 15 from outer surfaces of the protective cover 13. The wiper 15 is configured to wipe off the dirt from an outer surface of the cover element 13 in response to a relative movement between the cover element 13 and the body 12.

The sensor S may be a camera 16, a radar 17, a lidar 18, a laser scanner 19, or a proximity sensor 20, for example. The sensor assembly 11 may also be provided with a combination of two or even more sensors S, if needed.

Figure 5 discloses a sensor assembly 11 comprising a body 12 and a cover element 13 protruding axially from the body 12 so that a sensor S is located outside the body 12. Then the sensor assembly 11 is in normal sensing position. Dirt 21 can accumulate on outer surfaces of the cover element 13 and cause problems to sensing accuracy and can sometimes even prevent the sensing measures. Therefore, the sensing assembly 11 is provided with a cleaning device 14 comprising one or more wipers 15 which can remove the dirt 21 when the cover element 13 is moved axially inside the body 12, as it is shown in Figure 6. The wiper 15 is mounted to the body 12. There is a linear actuator 22 for generating the axial movement of the cover element 13 in relation to the body 12. The actuator 22 may be a pressure medium operated cylinder 23 or an electrical linear actuator, for example. The actuator 22 can be controlled by means of a control unit, or it can be controlled manually under control of an operator of a mining vehicle.

The cover element 13 may comprise a transparent outer shell, or alternatively, the cover element 13 may be made of non-transparent material and there may be one or more windows 24 made of transparent material and being located at a sensing area of the sensor S.

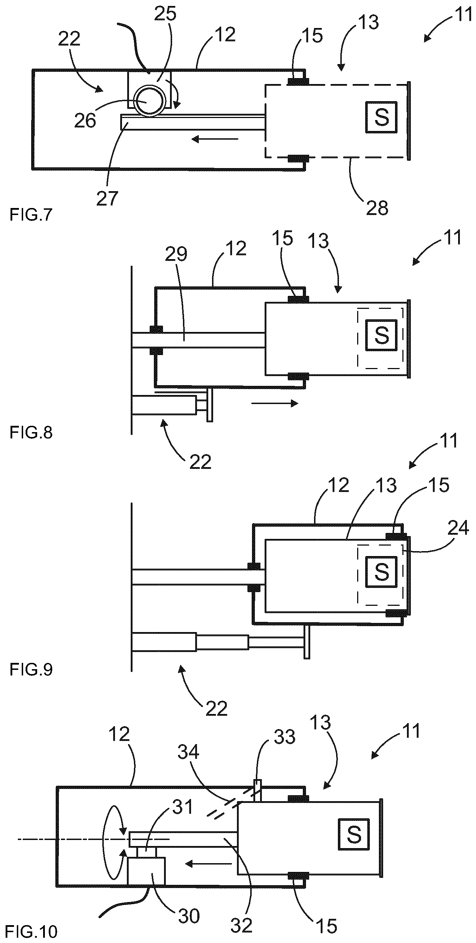

Figure 7 discloses a sensor assembly 11 which differs from the one shown in previous Figures 5 and 6 in that the actuator 22 comprises a rotation motor 25 configured to drive a toothed wheel 26 which is connected to a toothed rack 27. Then the cover element 13 can be moved axially by actuating the motor 25, which may be an electrical motor or a pressure medium operated motor. A further difference is that in Figure 7 the entire outer surface of the cover element 13 may made of transparent material, whereby there is a transparent outer shell 28.

Figure 8 and 9 discloses a sensor assembly 11 wherein a body 12 is moved axially in relation to a cover element 13 which is supported immovably to a fastening surface by means of a support 29. The actuator 22 for providing a normal operational mode and a cleaning mode shown in Figures 8 and 9 may be an electric linear motor, or a pressure medium cylinder, for example.

Figure 10 discloses a sensor assembly 11 wherein an axial movement for a cover element 13 is produced by providing a turning movement for the cover element 13 by means of a rotation motor 30, a transmission system 31 and a shaft 32. Further, the produced turning movement of the cover element 13 is converted into the axial movement by means of a pin 33 and groove 34 combination. The pin 33 may be mounted to the cover element 13 and is movable inside the groove 34 made to a body 12.

Alternatively, the pin 33 may be mounted to the body 12 and the groove 34 with the slanting surfaces may be formed on outer surface of the cover element 13.

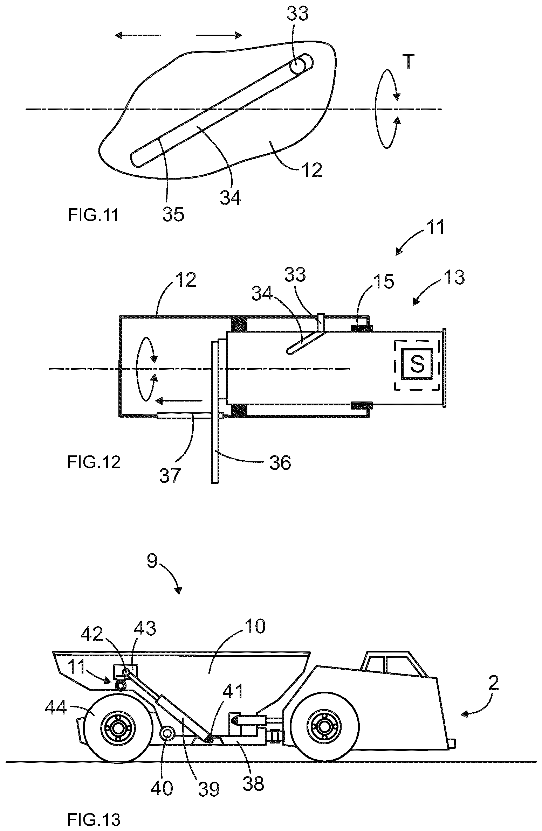

Figure 11 discloses a principle of a pin and groove system utilized in sensor assemblies shown in Figures 10, 12, and 18. A pin 33 is movable in a groove 34 when a relative turning T occurs between them. The turning T makes the pin 33 to slide along slanted surfaces 35 of the groove 34 and generates axial movements. Direction on the axial movement depends on direction of the turning movement T.

Figure 12 discloses a sensor assembly 11 wherein a lever 36, or an arm, mounted to an inner end of a cover element 13 is configured to transmit external turning movement to turn T the cover element 13. Then a pin 33 mounted to a body 12 can move under guidance of a groove 34 provided on a cover element 13. Movement along the groove 34 having slanted configuration converts the turning T into axial movement so that a cleaning operation by means of a wiper occurs. The transverse lever 36 turns and moves simultaneously in axial direction, wherefore there is an opening 37 on the body 12 for allowing the movements of the lever 36.

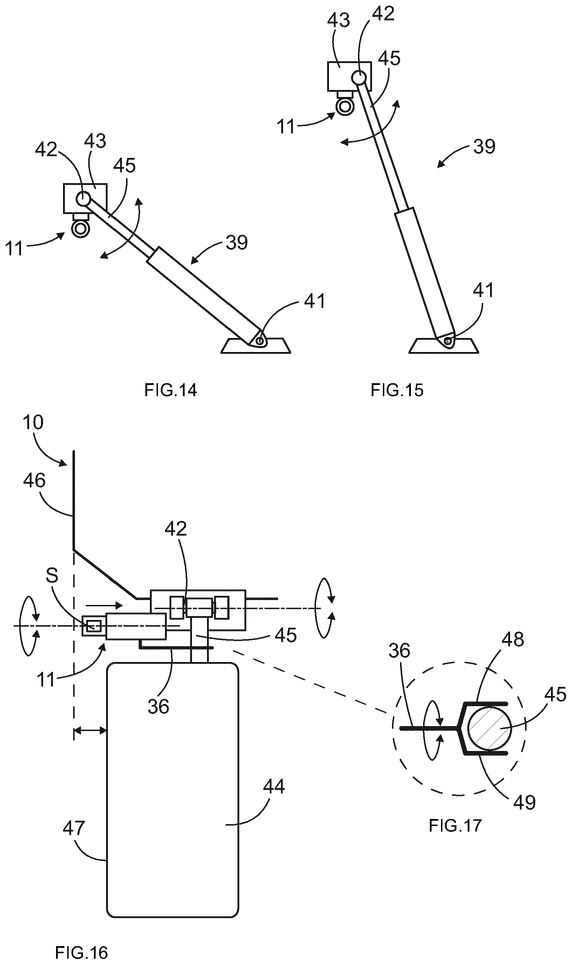

Figure 13 discloses a dump truck 9 which is a frame-steered wheeled vehicle comprising a dump box 10 at a rear frame part 38 of a carrier 2. The dump box 10 is tiltable by means of at least one hydraulic cylinder 39 in relation to tilting axis 40. A first end of the hydraulic cylinder 39 is connected by means of a first turning joint 41 to the carrier 2 and a second end of the hydraulic cylinder 39 is connected by means of a second turning joint 42 to a structure of the dump box 10. When the dump box 10 is tilted for emptying it, a relative turning movement occurs between the second end of the hydraulic cylinder 39 and the dump box 10. This can be clearly seen in Figures 14 and 15.

There may be a bracket 43 for mounting the second turning joint 42 to the dump box 10. A sensor assembly 11 may be mounted in connection with the bracket 43 so that there is good visibility to a rear wheel 44 and in a reversing direction of the dump truck 9.

Figures 14 and 15 show the hydraulic cylinder 39 in a normal position and in a tilted position. As can be noted, a piston rod 45 is extended in the tilted position shown in Figure 15. Orientation of the piston rod 45 changes in relation to the second turning joint 42 and this can be used to provide the sensor assembly 11 with a turning movement to be implemented when executing the cleaning movement. Different kind of force transmission elements and arrangements can be used for transmitting the turning movement to the sensor assembly 11.

Alternatively, there may be a transmission system in connection with the second turning joint 42 so that a turning movement occurring there can be transmitted to the sensor assembly 11.

Figure 16 discloses that a dump box 10 extends in transverse direction over a rear wheel 44 which is located below the dump box 10. A sensor assembly 11 is located between a lateral outer surface 46 of the dump box 10 and a lateral outer surface 47 of the rear wheel 44 closest to the outer surface 46 of the dump box 10. Then the sensor assembly 11 is protected by means of the dump box 10 against lateral collisions. A lever 36 is coupled to a piston rod 45 of a hydraulic cylinder tilting the dump box 10. The sensor assembly 11 is mounted immovably to a structure of the dump box 10 whereas the piston rod 45 moves during tilting of the dump box 10 and changes its orientation. The lever 36 transmits this changed movement and causes a cleaning process in the sensor assembly 11, as it is already disclosed.

Figure 17 shows that the lever 36 can comprises a branched end with a first branch 48 and second branch 49 between which the piston rod 45 is located. The branched end provides a simple and durable coupling element for the lever 36.

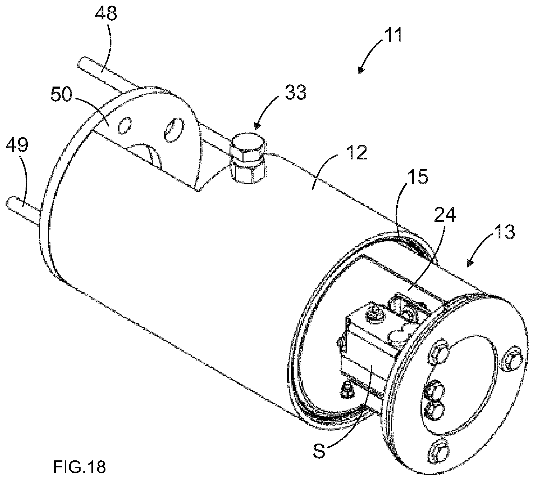

Figure 18 discloses a sensor assembly 11 wherein a body 12 and a cover element 13 have both tubular configurations. At a left side end there is a fastening flange 50 for mounting the body 12 immovably. At the left side end there are also visible branches 48 and 49 of a lever. By means of the branches 48, 49 and the arm (not shown) turning movement can be transmitted from a piston rod of a hydraulic cylinder to the cover element 13. A pin 33 is mounted to the body 12 and the cover element 13 is provided with a slanted groove configuration (not shown) whereby the turning movement can be converted into axial movement for wiping off dirt from a window 24 by means of a wiper 15 mounted to the body 12. The wiper 15 is a wiper ring. Due to the axial movement the cover element 13 together with window 24 and the sensor S moves towards an inside space of the body 12.

The drawings and the related description are only intended to illustrate the idea of the disclosed solution. In its details, the solution may vary within the scope of the claims.

## Claims

1. A sensor assembly (11) for a mining vehicle (1);
wherein the sensor assembly (11) comprises:
at least one sensor (S) for providing sensing data on surroundings of the mining vehicle (1);
a body (12);
a protective cover element (13) surrounding the sensor (S) ;
a cleaning device (14) for removing dirt (21) from outer surfaces of the cover element (13);
**characterized in that**
at least the surrounding cover element (13) is movable in relation to the body (12);
the sensor assembly (11) is provided with at least wiper (15) facing towards an outer surface of the cover element (13);
and wherein the wiper (15) is serving as the cleaning device (14) configured to wipe off the dirt (21) from the outer surface of the cover element (13) in response to the relative movement between the cover element (13) and the body (12).

2. The sensor assembly as claimed in claim 1, **characterized in that**
the sensor (S) is camera (16);
and the cover element (13) surrounding the sensor (S) comprises a transparent section.

3. The sensor assembly as claimed in claim 1 or 2, **characterized in that**
the cover element (13) is a tubular element with a round outer surface;
the wiper (15) is a wiper ring arranged to surround the tubular cover element (13).

4. The sensor assembly as claimed in any one of the preceding claims 1 - 3, **characterized in that**
the cover element (13) and the sensor (S) inside the cover element (13) are protruding from the body (12) and are movable inside the body (12) for providing the mentioned relative movement;
and the wiper (15) is mounted at a first end part of the body (12) and is configured to wipe off the dirt (21) from the outer surface of the cover element (13) in response to the movement of the cover element (13) towards an opposite second end part of the body (12).

5. The sensor assembly as claimed in claim 4, **characterized in that**
the cover element (13) is arranged to be turnable around longitudinal axis of the sensor assembly (11) and in relation to the body (12);
the cover element (13) comprises a groove (34) having slanted orientation in relation to the longitudinal axis;
and the body (12) comprises a transverse pin (33) which is in engagement with the groove (34) whereby the groove (34) and the pin (33) form a transmission mechanism for transforming turning movement of the cover element (13) into axial movement.

6. The sensor assembly as claimed in claim 5, **characterized in that**
the sensor assembly (11) comprises a lever (36) connected to the cover element (13) and configured to transmit external turning movement to the cover element (13).

7. The sensor assembly as claimed in claim 5, **characterized in that**
the sensor assembly (11) comprises a dedicated rotation actuator (30) connected to the cover element (13) and configured to turn the cover element (13).

8. The sensor assembly as claimed in any one of the preceding claims 1 - 4, **characterized in that**
the sensor assembly (11) comprises a dedicated linear actuator (22) connected to the cover element (13) and configured to move the cover element (13) in axial direction relative to the body (12).

9. A mining vehicle (1) comprising:
a movable carrier (2);
at least one mining work device (3) mounted on the carrier (2);
and at least one sensor assembly (11) for providing sensing data on surroundings of the mining vehicle (11);
**characterized in that**
the sensor assembly (11) is in accordance with any one of the preceding claims 1 - 8.

10. The mining vehicle as claimed in claim 9, **characterized in that**
the mining vehicle (1) is a wheeled dump truck (9) wherein the mining work device (3) is a dump box (10) for hauling detached rock material in a mine;
and wherein the at least one sensor assembly (11) is mounted to a structure of the dump box (10).

11. The mining vehicle as claimed in claim 10, **characterized in that**
the dump box (10) extends in transverse direction over rear wheels (44) which are located below the dump box (10) ;
and wherein at least one sensor assembly (11) is located between a lateral outer surface (46) of the dump box (10) and a lateral outer surface (47) of the rear wheel (44) closest to the outer surface (46) of the dump box (10).

12. The mining vehicle as claimed in claim 10 or 11, **characterized in that**
the dump box (10) is tiltable by means of at least one hydraulic cylinder (39) in relation to tilting axis (40) being in transverse direction relative to a longitudinal direction of the carrier (2);
a first end of the hydraulic cylinder (39) is connected by means of a first turning joint (41) to the carrier (2) and a second end of the hydraulic cylinder (39) is connected by means of a second turning joint (42) to a bottom part structure of the dump box (10) whereby a relative turning movement occurs between the second end of the hydraulic cylinder (39) and the dump box (10) in response to the tilting of the dump box (10);
and wherein the sensor assembly (11) comprises a lever (36) connected between the second end of the hydraulic cylinder (39) and the cover element (13) whereby the lever (36) is configured to transmit the mentioned relative turning movement to the cover element (13) wherein the turning movement is converted into axial movement.

13. A method for providing monitoring data on surroundings of a mining vehicle (1),
wherein the method comprises:
generating sensing data on the surroundings by means of an on-board sensor assembly (11) comprising at least one sensor (S);
protecting the sensor (S) by means of a protective cover (13) element surrounding the sensor (S); and
removing dirt (21) from outer surface of the protective cover (13);
**characterized by**
moving the cover element (13) in relation to a body (12) of the sensor assembly (11); and
wiping off the dirt (21) from the outer surface of the cover element (13) by means of at least wiper (15) mounted to the body (12) when the relative movement between the cover element (13) and the body (12) exists.

14. The method as claimed in claim 13, **characterized by**
coupling the sensor assembly (11) to moving elements of a dump box (10) of a dump truck (9) and moving the cover element (13) in relation to the body (12) simultaneously when tilting the dump box (10) so that the wiper (15) automatically executes the cleaning function each time the dump box (10) is tilted.

15. The method as claimed in claim 14, **characterized by**
tilting the dump box (10) by means of at least one hydraulic cylinder (39); and
coupling the sensor assembly (11) mechanically to the hydraulic cylinder (39) and transmitting turning movement of the hydraulic cylinder (39) to the cover element (13) for causing the relative movement between the cover element (13) and the body (12) for executing the wiping.
